(19) Europäisches Patentamt
European Patent Office
Office européen des brevets

(11) **EP 4 146 513 B1**

(12) **FASCICULE DE BREVET EUROPEEN**

(45) Date de publication et mention de la délivrance du brevet:
**01.05.2024 Bulletin 2024/18**

(21) Numéro de dépôt: **21722811.3**

(22) Date de dépôt: **28.04.2021**

(51) Classification Internationale des Brevets (IPC):
**B60W 40/04** (2006.01) **B60W 30/095** (2012.01)

(52) Classification Coopérative des Brevets (CPC):
**B60W 40/04; B60W 30/0956;** B60W 2554/80;
B60W 2554/801; B60W 2554/802; B60W 2554/803;
B60W 2554/804

(86) Numéro de dépôt international:
**PCT/EP2021/061062**

(87) Numéro de publication internationale:
**WO 2021/224077 (11.11.2021 Gazette 2021/45)**

(54) **ASSISTANCE A LA CONDUITE D'UN VEHICULE AUTOMOBILE**

VERFAHREN ZUR FAHRERASSISTENZ EINES KRAFTFAHRZEUGS

MOTOR VEHICLE DRIVER ASSISTANCE METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.05.2020 DE 102020112036**

(43) Date de publication de la demande:
**15.03.2023 Bulletin 2023/11**

(73) Titulaire: **Valeo Schalter und Sensoren GmbH**
**74321 Bietigheim-Bissingen (DE)**

(72) Inventeurs:
• **WEDAJO, Brouk**
**93012 Bobigny (FR)**

• **HEITZMANN, Thomas**
**93012 Bobigny (FR)**

(74) Mandataire: **Claassen, Maarten Pieter**
**Valeo Schalter und Sensoren GmbH**
**CDA-IP**
**Laiernstraße 12**
**74321 Bietigheim-Bissingen (DE)**

(56) Documents cités:
EP-A1- 3 281 831       DE-A1- 19 845 568
DE-A1-102015 200 215   US-A1- 2010 228 419

**Description**

**Domaine technique**

La présente invention concerne de manière générale le domaine des véhicules automobiles, et plus spécifiquement l'assistance la conduite d'un véhicule automobile.

**Arrière-plan technologique**

Afin d'augmenter la sécurité routière, certains véhicules automobiles, dits semi-autonomes, sont équipés de systèmes d'automatisation partielle ou de systèmes avancés d'assistance à la conduite (connus sous l'acronyme ADAS en terminologie anglo-saxonne), en particulier de systèmes réalisant, à la place du conducteur, le contrôle latéral et/ou le contrôle longitudinal du véhicule, ou alertant à tout le moins le conducteur d'une situation potentiellement dangereuse pour lui permettre de réagir à temps. Il est également prévu de rendre des véhicules automobiles complètement autonomes, c'est-à-dire sans conducteur.

Pour permettre à un véhicule autonome ou semi-autonome (appelé dans la suite « véhicule d'intérêt ») de détecter des situations dangereuses et de réagir en conséquence pour éviter ou réduire les risques d'accidents, le système d'assistance à la conduite embarqué sur ce véhicule doit être capable non seulement de détecter tous les objets dynamiques (appelés dans la suite « véhicules tiers ») présents dans l'environnement immédiat du véhicule, tels que les autres véhicules à moteur (voitures, camions, motocyclettes), mais aussi de prédire les mouvements futurs de ces véhicules tiers.

Comme décrit par exemple dans le document intitulé « A survey on motion prédiction and risk assessment for intelligent vehicles » (Lefèvre et al., Robomech Journal 2014,1 :1 http://www.robometechjournal.com/content/1/1/1), les méthodes connues de prédiction de trajectoires sont fondées sur un modèle de mouvement choisi parmi les trois types de modèles de mouvement suivants :

- les modèles de mouvement basés sur la physique ;
- les modèles de mouvement basés sur la manoeuvre ; et
- les modèles de mouvement sensibles aux interactions.

Le document DE 10 2015 200215 A1 décrit un procédé d'assistance à la conduite d'un véhicule automobile.

Les modèles de mouvement basés sur la physique sont les plus simples car ils considèrent que le mouvement futur d'un véhicule ne dépend que des lois de la physique. Ces modèles sont très dépendants de la précision des capteurs embarqués sur le véhicule d'intérêt et supposent que le véhicule tiers ne change pas d'état (vitesse ou cap). En conséquence, ces modèles ne permettent pas de prédire de façon fiable la trajectoire d'un véhicule tiers pour une prédiction à long terme, par exemple au-delà de deux secondes.

Les modèles de mouvement basés sur la manoeuvre sont un peu plus sophistiqués que les modèles de mouvement basés sur la physique car ils prennent également en compte la manoeuvre que le conducteur d'un véhicule tiers a l'intention d'effectuer. Néanmoins, le véhicule d'intérêt et les véhicules tiers dont on estime les manoeuvres sont considérés comme se déplaçant indépendamment les uns des autres, ce qui peut conduire à des interprétations erronées de certaines situations routières et affecter l'évaluation du risque pour le véhicule d'intérêt.

Les modèles de mouvement sensibles aux interactions sont actuellement les plus évolués car ils prennent en compte le fait que le mouvement d'un véhicule peut être influencé par le mouvement des autres véhicules présents dans la scène routière. La plupart de ces modèles utilisent des réseaux bayésiens dynamiques permettant de considérer des dépendances par paire entre plusieurs véhicules mobiles. Ces modèles permettent des prévisions fiables et à plus long terme, mais sont incompatibles avec la nécessité d'évaluer les risques en temps réel pour le véhicule d'intérêt car ils nécessitent des ressources importantes en temps de calcul pour pouvoir estimer, pour toutes les paires de véhicules possibles, toutes les trajectoires potentielles des véhicules.

**Résumé de l'invention**

La présente invention a pour but de pallier les limitations de l'art antérieur en proposant notamment une méthode simplifiée permettant de prédire de manière fiable et peu coûteuse en temps de calcul au moins une position future de chaque véhicule présent dans une scène routière où évolue le véhicule d'intérêt.

L'invention a également pour but d'utiliser cette méthode simplifiée pour prédire rapidement la trajectoire d'une pluralité de véhicules mobiles dans l'environnement du véhicule tiers sur une durée de prédiction plus importante que les méthodes utilisant un modèle de mouvement basés sur la physique.

En conséquence, la présente invention a pour objet un procédé d'assistance à la conduite d'un véhicule automobile d'intérêt comportant :

- une étape de détection lors de laquelle un système embarqué sur ledit véhicule automobile d'intérêt détecte une pluralité de véhicules tiers présents à un instant initial dans l'environnement du véhicule automobile d'intérêt, dans une zone de roulage à plusieurs voies de circulation;

- un premier cycle de prédiction, par ledit système embarqué, d'une première position relative et d'une première vitesse relative de chaque véhicule $O_k$ dudit ensemble, dans ledit premier référentiel et pour un premier instant de prédiction suivant ledit instant initial, ledit premier cycle de prédiction comportant :

   o une étape de mémorisation, dans une base de données dudit système embarqué, de données initiales pour chaque véhicule $O_k$ d'un ensemble de K véhicules comprenant les véhicules tiers détectés à l'instant initial et le véhicule d'intérêt, lesdites données initiales comprenant une information relative à la voie de circulation courante, une position relative courante et une vitesse relative courante de chaque véhicule $O_k$ dudit ensemble à l'instant initial et dans un premier référentiel lié au véhicule d'intérêt ;

   o une étape de tri lors de laquelle un ordre de priorité est affecté aux K véhicules $O_k$ de l'ensemble, l'ordre de priorité étant déterminé en fonction de la position et de la voie de circulation de chaque véhicule $O_k$ de l'ensemble mémorisées dans la base de données, et correspondant à un ordre dans lequel les véhicules $O_k$ de l'ensemble se succèdent dans ladite zone de roulage depuis un véhicule détecté à une position la plus éloignée en avant du véhicule d'intérêt;

   o une étape de sélection de chaque véhicule $O_k$ dudit ensemble dans l'ordre de priorité prédéterminé, et, pour chaque véhicule sélectionné $O^*_k$ dudit ensemble :

   - une sous-étape d'identification d'un autre véhicule dudit ensemble susceptible d'être un véhicule cible primaire pour le véhicule sélectionné O*k;

   - une sous-étape d'estimation d'une manoeuvre en cours ou sur le point d'être effectuée par le véhicule sélectionné $O^*_k$ à partir au moins du véhicule cible primaire identifié, d'informations relatives au seul véhicule sélectionné $O^*_k$ et d'informations relatives à l'environnement courant du véhicule sélectionné $O^*_k$;

   - une sous-étape d'estimation du déplacement du véhicule sélectionné $O^*_k$ entre l'instant initial et ledit premier instant de prédiction à partir de la manoeuvre estimée pour le véhicule sélectionné $O^*_k$ ;

la première position relative et la première vitesse relative du véhicule sélectionné $O^*_k$ pour ledit premier instant de prédiction étant prédites à partir du déplacement estimé.

Dans un mode de réalisation possible, les sous-étapes sont réalisées à partir de données de position et de vitesse transformées dans un référentiel à deux dimensions lié au véhicule sélectionné $O^*_k$.

La manoeuvre estimée est choisie de préférence dans un ensemble prédéfini de manoeuvres possibles. L'ensemble prédéfini de manoeuvre possibles pour un véhicule sélectionné $O^*_k$ peut comprendre : le maintien dans sa voie courante ; son changement de voie pour la voie gauche ; son changement de voie pour la voie droite; son arrêt sur sa voie courante.

Dans un mode de réalisation possible, la sous-étape d'identification d'un véhicule cible primaire potentielle pour le véhicule sélectionné $O^*_k$ comprend une recherche d'un véhicule de l'ensemble situé sur la même voie, à l'avant et le plus proche du véhicule sélectionné $O^*_k$.

Dans un mode de réalisation possible, les informations relatives au seul véhicule sélectionné $O^*_k$ comprennent par exemple son déplacement latéral, et/ou un état allumé ou éteint de l'un de ses clignotants, et/ou un historique de ses positions mémorisées.

Dans un mode de réalisation possible, les informations relatives à l'environnement courant du véhicule sélectionné $O^*_k$ comprennent le type de lignes de marquage de la voie de circulation sur laquelle le véhicule sélectionné $O^*_k$ est situé et/ou l'occupation des voies de circulation adjacentes à la voie de circulation courante du véhicule sélectionné $O^*_k$, et/ou la limitation de vitesse courante affectée à la voie de circulation.

Dans un mode de réalisation possible, le procédé comporte un deuxième cycle de prédiction, par ledit système embarqué, d'une deuxième position relative $\{X; Y; \theta\}_{k,2}$ et d'une deuxième vitesse relative $\{V_X; V_Y ; \dot{\theta}\}_{k,2}$ de chaque véhicule $O_k$ dudit ensemble, dans ledit premier référentiel et pour un deuxième instant de prédiction suivant ledit premier instant de prédiction, le deuxième cycle de prédiction comportant :

- une première étape de réactualisation de la base de données dans laquelle les données initiales de position relative et de vitesse relative sont remplacées par la première position relative $\{X; Y; \theta\}_{k,1}$ et la première vitesse relative $\{V_X; V_Y; \dot{\theta}\}_{k,1}$ prédites au premier cycle de prédiction pour chaque véhicule $O_k$ de l'ensemble ; et

- l'étape de tri, l'étape de sélection et les sous-étapes du premier cycle de prédiction, dans lesquelles l'instant initial a été remplacé par le premier instant de prédiction, et le premier instant de prédiction a été remplacé par le deuxième instant de prédiction.

Le procédé peut comporter un nombre N supérieur à 2 de cycles de prédiction successifs, chaque $n^{\text{ième}}$ cycle de prédiction permettant de prédire une $n^{\text{ième}}$ position relative $\{X; Y; \theta\}_{k,n}$ et une $n^{\text{ième}}$ vitesse relative $\{V_X; V_Y; \dot{\theta}\}_{k,n}$ de chaque véhicule $O_k$ dudit ensemble, dans ledit premier référentiel et pour un $n^{\text{ième}}$ instant de prédiction suivant un instant de prédiction précédent, chaque $n^{\text{ième}}$ cycle de prédiction comportant :

- une étape de réactualisation de la base de données dans laquelle les données de position relative et de vitesse relative sont remplacées par la position relative et la vitesse relative prédites au cycle de prédiction précédent pour chaque véhicule $O_k$ de l'ensemble ; et
- l'étape de tri, l'étape de sélection et les sous-étapes du premier cycle de prédiction, dans lesquelles l'instant initial a été remplacé par l'instant de prédiction précédent, et le premier instant de prédiction a été remplacé par le $n^{\text{ième}}$ instant de prédiction.

Les instants de prédiction successifs sont séparés de préférence par un pas temporel constant.

Dans un mode de réalisation possible, N est égal à 33 et le pas temporel constant est égal à 200 ms.

L'invention a également pour objet un système d'assistance à la conduite embarqué sur un véhicule d'intérêt, configuré pour implémenter le procédé selon l'invention.

## Brève description des dessins

L'invention sera mieux comprise au vu de la description suivante faite en référence aux figures annexées, dans lesquelles :

- la figure 1 illustre schématiquement, en vue de dessus, un exemple de scène routière servant à illustrer les principes de l'invention ;

- la figure 2 représente schématiquement des trajectoires prédites par un procédé conforme à l'invention pour l'exemple de la scène routière de la figure 1 ;

- la figure 3 représente des étapes susceptibles d'être mises en oeuvre selon un premier mode de réalisation d'un procédé de détection conforme à l'invention.

## Description de mode(s) de réalisation

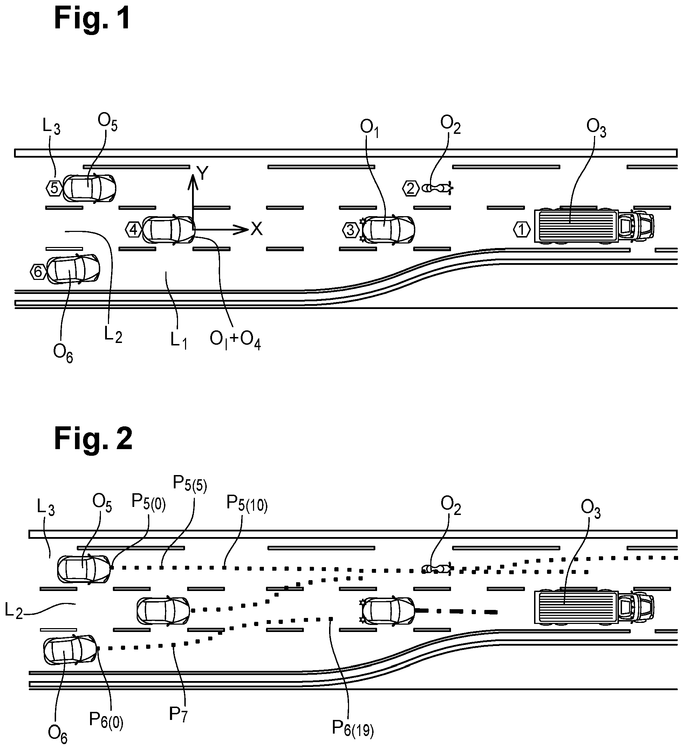

Pour fixer les idées, l'invention va à présent être décrite dans le cadre de l'exemple non limitatif de la scène routière représentée schématiquement en vue de dessus sur la figure 1.

Sur cette figure 1, un véhicule d'intérêt $O_I$, disposant d'un système avancé d'aide à la conduite (non représenté) conforme à l'invention, se déplace dans une zone de roulage comportant trois voies de circulation $L_1, L_2, L_3$. Cinq autres véhicules $O_1$ à $O_3$ et $O_5$, $O_6$ évoluent également dans l'environnement du véhicule d'intérêt $O_I$. Pour simplifier, on suppose non limitativement que la zone de roulage correspond à une portion d'autoroute à deux voies $L_2, L_3$, la voie $L_1$ correspondant à une bretelle d'accès, et que tous les véhicules circulent dans le même sens (de gauche vers la droite sur la figure 1), selon le code de la route français (dépassement par la gauche et vitesse limitée à 130 km/h). Dans l'exemple non limitatif, les véhicules tiers $O_1$, $O_5$ et $O_6$ sont tous des véhicules automobiles, le véhicule tiers $O_2$ est une motocyclette, et le véhicule tiers $O_3$ est un camion. Par ailleurs, dans cet exemple, le camion $O_3$ est à l'arrêt, et les feux stop du véhicule tiers $O_1$ sont allumés car son conducteur procède à un freinage. La nature des véhicules tiers présents dans l'environnement du véhicule d'intérêt est sans incidence sur les principes de la présente invention. En d'autres termes, un véhicule tiers peut être indifféremment un véhicule classique, un véhicule semi-autonome ou un véhicule autonome.

On suppose dans la suite que le véhicule d'intérêt $O_I$ est équipé :

- de différents capteurs (non représentés) de différentes natures (par exemple capteurs d'image, Radar, Lidar) lui permettant de détecter, d'une part, les véhicules tiers $O_1$ à $O_3$ et $O_5$, $O_6$ présents dans son environnement, et d'autre part, les informations relatives à la géométrie de de la scène routière (en particulier les lignes de marquage, les panneaux de signalisation...) ;

- d'un système ADAS (non représenté) lui permettant de traiter les informations détectées et de prendre des décisions adaptées (alertes au conducteur du véhicule d'intérêt $O_I$ et/ou contrôle latéral et longitudinal du véhicule d'intérêt $O_I$).

Un procédé complet d'assistance à la conduite conforme à l'invention consiste à détecter la présence des différents véhicules tiers à un instant initial $t_0$ et à prédire, pour le véhicule d'intérêt $O_I$ et pour tous les véhicules tiers dont la présence a été détectée à l'instant initial $t_0$, la trajectoire future (ou trajectoire de prédiction) sur une durée de prédiction totale prédéterminée.

Dans la suite, on utilisera les notations suivantes :

- $O_k$ représente un véhicule d'un ensemble de K véhicules comprenant le véhicule d'intérêt $O_I$ et tous les véhicules tiers détectés à l'instant initial ta. Ainsi, dans l'exemple de la figure 1, l'ensemble comporte en tout six véhicules, à savoir les véhicules tiers détectés $O_1$ à $O_3$ et $O_5$, $O_6$, et le véhicule d'intérêt $O_I$ qui portera indifféremment dans la suite la référence $O_I$ ou $O_4$.
- $P_k(0)$ représente le point associé à un véhicule $O_k$ de l'ensemble de K véhicules à l'instant initial de détection $t_0$, ce point $P_k(0)$ étant associé classiquement à :

  - la position relative courante $\{X; Y; \theta\}_{k,0}$ du véhicule $O_k$ dans un premier référentiel à deux dimensions lié au véhicule d'intérêt $O_I$ (voir figure 1), où $\theta$ représente l'orientation relative en radian du véhicule $O_k$ vis-à-vis du premier référentiel $O_I$,
  - la vitesse relative courante $\{V_X; V_Y; \dot\theta\}_{k,0}$ du véhicule $O_k$ dans ce même premier référentiel à deux dimensions lié au véhicule d'intérêt $O_I$ où $\dot\theta$ représente la variation en radian/secondes de l'orientation relative du véhicule $O_k$ vis-à-vis du premier référentiel $O_I$;.

- $P_k(n)$ représente un point de la trajectoire de prédiction pour un véhicule $O_k$ de l'ensemble de K véhicules, à un instant de prédiction $t_k$ tel que

$$t_k = t_0 + n\Delta t$$

ce point $P_k(n)$ étant également associé classiquement à :

  - la position relative $\{X; Y; \theta\}_{k,n}$ du véhicule $O_k$ prédite à l'instant de prédiction $t_k$ dans le premier référentiel lié au véhicule d'intérêt $O_I$;
  - la vitesse relative $\{V_X; V_Y; \dot\theta\}_{k,n}$ du véhicule $O_k$ prédite à l'instant de prédiction $t_k$ dans ce même premier référentiel lié au véhicule d'intérêt $O_I$.

Une trajectoire de prédiction pour chaque véhicule $O_k$ pris dans l'ensemble comprenant les véhicules tiers détectés et le véhicule d'intérêt, est ainsi formée à partir d'un point initial $P_k(0)$ mesuré à l'instant initial $t_0$, par une succession de N points $P_k(n)$ estimés successivement avec un pas temporel $\Delta t$, dans lequel n varie de 1 à N.

Dans un exemple d'implémentation, le pas temporel $\Delta t$ est constant entre chaque point successif d'une trajectoire prédite. A titre d'exemple, on choisit un pas temporel $\Delta t$ égal à 200 ms, et on prévoit le nombre N égal à 33, ce qui permet de faire une prédiction de trajectoire pour chaque véhicule $O_k$ sur une durée de prédiction totale de 7 secondes à compter de l'instant initial $t_0$. La figure 2 illustre un exemple des portions des différentes trajectoires prédites pour les différents véhicules $O_k$ conformément aux principes de l'invention qui vont être détaillés ci-après. Par exemple, la trajectoire de prédiction pour le véhicule $O_5$ comprend le point initial à partir du point $P_5(0)$, et une succession de points prédits tels que le point $P_5(5)$ à l'instant de prédiction $t_5$ et le point $P_5(10)$ à l'instant de prédiction tio, et la trajectoire de prédiction pour le véhicule $O_6$ comprend le point initial à partir du point Pe(0), et une succession de points prédits tels que le point $P_6(7)$ à l'instant de prédiction $t_7$ et le point $P_5(19)$ à l'instant de prédiction $t_{19}$.

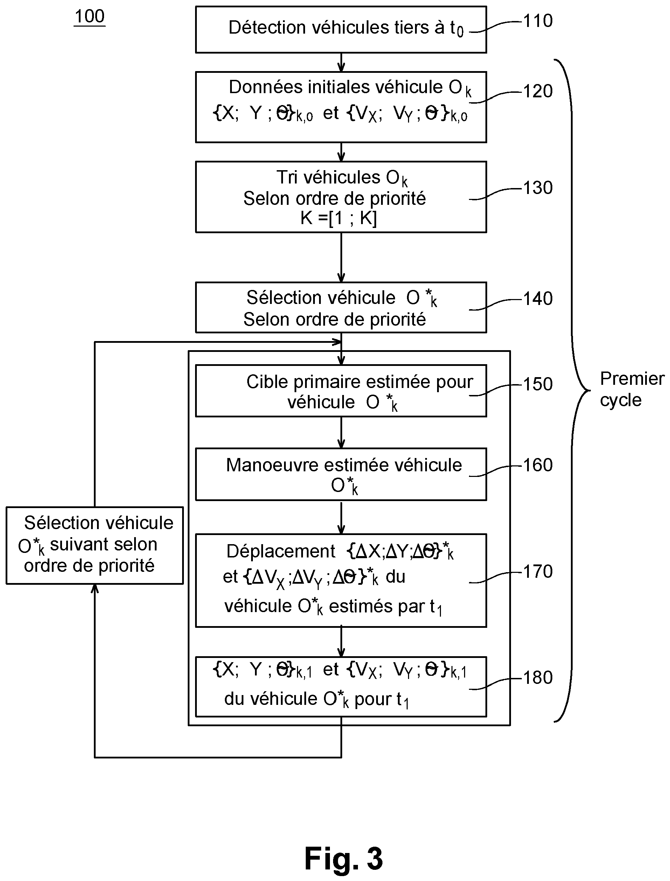

En référence à la figure 3, un procédé 100 conforme à l'invention comprenant au moins un premier cycle de prédiction permettant au système embarqué sur le véhicule d'intérêt $O_I$ ($O_4$) de prédire pour chaque véhicule $O_k$ le premier point $P_k(1)$ à partir du point $P_k(0)$, va à présent être décrit.

Le procédé 100 comporte une étape initiale 110 de détection lors de laquelle le système embarqué sur le véhicule automobile d'intérêt $O_I$ détecte une pluralité de véhicules tiers présents à l'instant initial $t_0$ dans l'environnement du véhicule automobile d'intérêt $O_I$, dans une zone de roulage à plusieurs voies de circulation. Dans l'exemple des figures 1 et 2, on suppose ainsi que le système embarqué sur le véhicule d'intérêt $O_I$ détecte la présence à l'instant

initial $t_0$ des véhicules tiers $O_1$ à $O_3$, $O_5$ et $O_6$.

Conformément aux notations indiquées ci-avant, le but de ce premier cycle de prédiction est de permettre au système embarqué sur le véhicule d'intérêt $O_I$ de prédire les paramètres associés au premier point $P_k(1)$, à savoir la première position relative $\{X; Y; \theta\}_{k,1}$ et la première vitesse relative $\{V_X; V_Y; \dot{\theta}\}_{k,1}$ de chaque véhicule $O_k$, dans le référentiel associé au véhicule d'intérêt et pour un premier instant de prédiction $t_1$ suivant l'instant initial $t_0$.

Pour ce faire, le premier cycle de prédiction débute par une étape 120 de mémorisation, dans une base de données du système embarqué, de données initiales pour chaque véhicule $O_k$ d'un ensemble de K véhicules comprenant les véhicules tiers détectés à l'instant initial $t_0$ et le véhicule d'intérêt $O_I$. Les données initiales comprennent :

- d'une part, les paramètres indiqués ci-avant associés à chaque point initial $P_k(0)$, à savoir une position relative courante $\{X; Y; \theta\}_{k,0}$ et une vitesse relative courante $\{V_X; V_Y; \dot{\theta}\}_{k,0}$ de chaque véhicule $O_k$ de l'ensemble à l'instant initial $t_0$ et exprimées dans le premier référentiel lié au véhicule d'intérêt $O_I$,
- d'autre part, la voie de circulation courante de chaque véhicule $O_k$ à l'instant initial $t_0$, telle qu'estimée par le système embarqué sur le véhicule d'intérêt $O_I$ (estimation classique consistant par exemple à identifier la voie de circulation pour laquelle la distance latérale selon l'axe Y calculée entre le centre du véhicule d'intérêt $O_I$ et du centre de chaque voie de circulation $L_1$, $L_2$ et $L_3$ est minimale).

Le tableau 1 ci-dessous donne un exemple du contenu de la base de données à l'instant de détection $t_0$ pour la scène routière représentée sur les figures 1 et 2 :

**Tableau 1 - Base initiale de travail**

| Véhicule | $O_1$ | $O_2$ | $O_3$ | $O_I$=$O_4$ | $O_5$ | $O_6$ |
|---|---|---|---|---|---|---|
| Point à $t_0$ | $P_1(0)$ k=1 | $P_2(0)$ k=2 | $P_3(0)$ k=3 | $P_4(0)$ k=4 | $P_5(0)$ k=5 | $P_6(0)$ k=6 |
| $\{X; Y; \theta\}_{k,0}$ | {60;0;0} | {70;3,5;0} | {100;0;0} | {0;0;0} | {-20;3,5;0} | {-25;-3,5;0} |
| $\{Vx; V_Y; \dot{\theta}\}_{k,0}$ | {-16,1;0;0} | {5,5;0;0} | {-36,1;0;0} | {0;0;0} | {0,2;0;0} | {-0,5;+0,8;0} |
| N° Voie | 2 | 3 | 2 | 2 | 3 | 1 |

Selon une caractéristique importante de l'invention, le premier cycle de prédiction se poursuit par une étape 130 de tri lors de laquelle un ordre de priorité est affecté aux K véhicules $O_k$ de l'ensemble, l'ordre de priorité étant déterminé en fonction de la position et de la voie de circulation de chaque véhicule $O_k$ de l'ensemble mémorisées dans la base de données, et correspondant à un ordre dans lequel les véhicules $O_k$ de l'ensemble se succèdent dans la zone de roulage depuis un véhicule détecté à une position la plus éloignée en avant du véhicule d'intérêt $O_I$. Dans le cas de la scène routière donnée à titre d'exemple sur les figures 1 et 2, et comme indiqué par les numéros placés à l'arrière de chaque véhicule, c'est le camion $O_3$ qui apparaît comme étant le premier véhicule à considérer, suivi de la motocyclette $O_2$, puis du véhicule $O_1$, du véhicule d'intérêt $O_4$, du véhicule $O_5$ et enfin du véhicule $O_6$.

Le tableau 2 ci-dessous illustre le tableau 1 dont les colonnes ont été réordonnées selon l'ordre de priorité correspondant à l'exemple de scène routière des figures 1 et 2 :

**Tableau 2 - Base initiale de travail réordonnée selon ordre de priorité**

| Véhicule | $O_3$ | $O_2$ | $O_1$ | $O_I$=$O_4$ | $O_5$ | $O_6$ |
|---|---|---|---|---|---|---|
| Point à $t_0$ | $P_3(0)$ k=3 | $P_2(0)$ k=2 | $P_1(0)$ k=1 | $P_4(0)$ k=4 | $P_5(0)$ k=5 | $P_6(0)$ k=6 |
| $\{X; Y; \theta\}_{k,0}$ | {100;0;0} | {70;3,5;0} | {60;0;0} | {0;0;0} | {-20;3,5;0} | {-25;-3,5;0} |
| $\{V_X; V_Y; \dot{\theta}\}_{k,0}$ | {-36,1;0;0} | {5,5;0;0} | {-16,1;0;0} | {0;0;0} | {0,2;0;0} | {-0,5;+ 0,8;0} |
| N° Voie | 2 | 3 | 2 | 2 | 3 | 1 |
| Ordre de priorité | 1 | 2 | 3 | 4 | 5 | 6 |

Le premier cycle de prédiction se poursuit par un traitement de prédiction particulier effectué, par le système embarqué du véhicule d'intérêt, sur chacun des véhicules $O_k$ de l'ensemble (y compris le véhicule d'intérêt $O_I$). Plus

précisément, le système embarqué sur le véhicule d'intérêt $O_l$ sélectionne (étape 140) chaque véhicule $O_k$ dans l'ordre de priorité affectée à l'étape 130. On note par la suite $O_k{}^*$ chaque véhicule sélectionné dans l'ordre de priorité. Dans l'exemple de la scène routière représentée sur les figures 1 et 2, le traitement de prédiction particulier va ainsi d'abord être effectué pour le véhicule sélectionné Os* correspondant au camion Os, puis au véhicule sélectionné $O_2{}^*$ correspondant à la motocyclette $O_2$, et ainsi de suite jusqu'à la sélection du dernier véhicule Os* du tableau 2 correspondant au véhicule $O_6$.

Le traitement particulier effectué sur chaque véhicule sélectionné $O_k{}^*$ comprend essentiellement les sous-étapes suivantes, qui seront détaillées plus amplement dans la suite :

- une sous-étape 150 d'identification d'un autre véhicule dudit ensemble susceptible d'être un véhicule cible primaire pour le véhicule sélectionné $O^*_k$;
- une sous-étape 160 d'estimation d'une manoeuvre en cours ou sur le point d'être effectuée par le véhicule sélectionné $O^*_k$ à partir au moins du véhicule cible primaire identifié à la sous-étape 150, d'informations relatives au seul véhicule sélectionné $O^*_k$ et d'informations relatives à l'environnement courant du véhicule sélectionné $O^*_k$; et
- une sous-étape 170 d'estimation du déplacement du véhicule sélectionné $O^*_k$ entre l'instant initial $t_0$ et le premier instant de prédiction $t_1$, à partir de la manoeuvre estimée à la sous-étape 160 pour le véhicule sélectionné $O^*_k$.

Afin de simplifier les calculs, les sous-étapes 150, 160 et 170 sont de préférence réalisées, non pas à partir de données exprimées dans le premier référentiel lié au véhicule d'intérêt OI (sauf dans le cas où le traitement concerne le véhicule $O_I$ en tant que véhicule sélectionné), mais de données transformées dans un référentiel à deux dimensions lié au véhicule sélectionné $O^*_k$. Tout le traitement de prédiction est ainsi effectué comme si le système embarqué sur le véhicule d'intérêt $O_I$ était en fait embarqué sur le véhicule sélectionné $O^*_k$. Le système doit ainsi, pour chaque traitement de prédiction associé à un véhicule sélectionné $O^*_k$, transformer au préalable (par rotation et translation) toutes les données mémorisées dans la base initiale réordonnée, dans le référentiel associé au véhicule sélectionné $O^*_k$, et mémoriser ces informations dans une base temporaire représentative du véhicule sélectionné $O^*_k$.

A titre d'exemples, le tableau 3 ci-dessous donne la base temporaire obtenue lorsque le véhicule sélectionné $O^*_k$ pour le traitement selon les sous-étapes 150 à 170 correspond au camion $O_3$ (premier traitement selon l'ordre de priorité), et le tableau 4 ci-dessous donne la base temporaire obtenue lorsque le véhicule sélectionné $O^*_k$ pour le traitement selon les sous-étapes 150 à 170 correspond au véhicule $O_3$ (deuxième traitement selon l'ordre de priorité) :

**Tableau 3 - Base temporaire véhicule sélectionné $O_3{}^*=O_3$**

| Véhicule | $O_3{}^*=O_3$ | $O_2$ | $O_1$ | $O_I=O_4$ | $O_5$ | $O_6$ |
|---|---|---|---|---|---|---|
| $\{X; Y; \theta\}^*_{k,0}$ | {0;0;0} | {-30;3,5;0} | {-40;0;0} | {-100;0;0} | {-120;3,5;0} | {-125;-3,5;0} |
| $\{V_X; V_Y; \dot{\theta}\}^*_{k,0}$ | {0;0;0} | {41,6;0;0} | {20;0;0} | {36,1;0;0} | {36,3;0;0} | {35,6;0;0} |
| N° **Voie** | **2** | 3 | 2 | 2 | 3 | 1 |

**Tableau 4 - Base temporaire véhicule sélectionné $O_2{}^*=O_2$**

| Véhicule | $O_3$ | $O^*=O_2$ | $O_1$ | $O_I=O_4$ | $O_5$ | $O_6$ |
|---|---|---|---|---|---|---|
| $\{X; Y; \theta\}^*_{k,0}$ | {30;-3,5;0} | {0;0;0} | {-10;-3,5;0} | {-70;-3,5;0} | {-90;0;0} | {-95;0;0} |
| $\{V_X; V_Y; \dot{\theta}\}^*_{k,0}$ | {-41,6;0;0} | {0;0;0} | {-21,6;0;0} | {-5,5;0;0} | {-5,3;0;0} | {-6;+0,8;0} |
| **N° Voie** | 2 | **3** | 2 | 2 | 3 | 1 |

Dans les tableaux 3 et 4 ci-dessus :

- $\{X; Y; \theta\}^*_{k,0}$ représente la position relative courante de chaque véhicule $O_k$ après transformation dans un référentiel à deux dimensions lié au véhicule sélectionné $O^*_k$ ;
- $\{V_X; V_Y; \dot{\theta}\}_{k,0}$ représente la vitesse relative courante de chaque véhicule $O_k$ après transformation dans le référentiel à deux dimensions lié au véhicule d'intérêt $O^*_k$.

A partir des informations transformées mémorisées dans la base temporaire représentative d'un véhicule sélectionné, le système embarqué va pouvoir identifier (sous-étape 150 mentionnée ci-avant) s'il existe, dans l'ensemble des K véhicules, une cible primaire pour le véhicule sélectionné $O^*_k$. L'identification d'un telle cible primaire potentielle est classiquement réalisée par le système embarqué du véhicule d'intérêt en recherchant un véhicule de l'ensemble qui, d'après les informations transformées mémorisées dans la base temporaire représentative du véhicule sélectionné $O^*_k$, est situé sur la même voie, à l'avant et le plus proche du véhicule sélectionné $O^*_k$. Cette recherche est effectuée classiquement en recherchant le véhicule pour lequel le temps estimé avant collision (ou TTC, acronyme anglo-saxon mis pour Time-To-Collision) avec le véhicule sélectionné $O^*_k$ est le plus faible.

Dans l'exemple de scène routière représentée sur les figures 1 et 2, aucune cible primaire ne sera détectée lors de la sous-étape 150 réalisée pour le véhicule sélectionné correspondant au camion Os, à la motocyclette $O_2$ ou au véhicule Os, car aucun véhicule n'est situé directement à l'avant et sur la même voie que ces véhicules. En revanche, la cible primaire qui sera détectée à l'issue de la sous-étape 150 sera :

- le camion $O_3$ lorsque le véhicule sélectionné pour traitement correspond au véhicule $O_1$ ;
- le véhicule $O_1$ lorsque le véhicule sélectionné pour traitement correspond au véhicule d'intérêt $O_4$ ; et
- la motocyclette $O_2$ lorsque le véhicule sélectionné pour traitement correspond au véhicule d'intérêt $O_5$.

Le système embarqué va pouvoir ensuite estimer (sous-étape 160 mentionnée ci-avant) la manoeuvre en cours ou sur le point d'être effectuée par le véhicule sélectionné $O^*_k$ en utilisant notamment :

- la cible primaire (ou l'absence de cible primaire) identifiée à la sous-étape précédente 150 pour le véhicule sélectionné $O^*_k$ ;
- des informations relatives au seul véhicule sélectionné $O^*_k$, par exemple :

  • son déplacement latéral, et/ou
  • l'état allumé ou éteint de l'un de ses clignotants, et/ou
  • un historique de ses positions mémorisées.

- des informations relatives à l'environnement courant du véhicule sélectionné $O^*_k$ telles que :

  • le type de lignes de marquage (en pointillés ou continue) de la voie de circulation sur laquelle le véhicule sélectionné $O^*_k$ est situé ; et/ou
  • l'occupation des voies de circulation adjacentes à la voie de circulation courante du véhicule sélectionné $O^*_k$; et/ou
  • la limitation de vitesse courante affectée à la voie de circulation (issue par exemple d'un système GPS ou d'une carte numérique pré enregistrée dans le système embarqué, ou extraite de l'image d'un panneau de signalisation capturée par une caméra embarquée sur le véhicule d'intérêt).

La manoeuvre prédite pour le véhicule sélectionné $O^*_k$ fait partie de préférence d'un ensemble prédéfini de manoeuvres possibles, telles que :

- $KL_k$ ou maintien dans sa voie courante: Le véhicule sélectionné $O^*_k$ continue de rouler sur sa voie de roulage courante ;

- $LLC_k$ ou changement de voie pour la voie gauche: Le véhicule sélectionné $O^*_k$ va passer sur la voie adjacente à gauche de sa voie de roulage courante ;

- $RLC_k$ ou changement de voie pour la voie droite: Le véhicule sélectionné $O^*_k$ va passer sur la voie adjacente à droite de sa voie de roulage courante ;

- $S_k$ ou arrêt sur voie courante: Le véhicule sélectionné $O^*_k$ va s'arrêter sur sa voie courante de roulage.

Les manoeuvres précédentes ne sont pas limitatives. D'autres manoeuvres plus adaptées à d'autres configurations routières (par exemple l'arrivée sur un rond-point ou sur une intersection) peuvent être envisagées sans départir du cadre de la présente invention.

Le tableau 5 ci-dessous donne notamment les cibles primaires, manoeuvres prédites, voie courante, et voie cible obtenues pour les différents véhicules de la scène routière illustrée sur les figures 1 et 2 à l'issue de la sous-étape 160 pour l'instant de prédiction $t_1$:

**Tableau 5**

| Véhicule sélectionné $O^*_k$ | Cible primaire | Manoeuvre prédite | Voie courante | Voie cible |
|---|---|---|---|---|
| $O_1$ | $O_3$ | $KL_1$ | $L_2$ | $L_2$ |
| $O2$ | $\varnothing$ | $KL_2$ | $L_3$ | $L_3$ |
| $O_3$ | $\varnothing$ | $S_3$ | $L_2$ | $L_2$ |
| $O_4=O_I$ | $O_1$ | $KL_4$ | $L_2$ | $L_2$ |
| $O_5$ | $O_2$ | $KL_5$ | $L_3$ | $L_3$ |
| $O_6$ | $\varnothing$ | $LLC_6$ | $L_1$ | $L_2$ |

Le système embarqué peut alors estimer (sous-étape 170), dans le référentiel du véhicule sélectionné $O^*_k$, le déplacement prédit en position et en vitesse pour le véhicule sélectionné $O^*_k$ entre l'instant initial $t_0$ et le premier instant de prédiction $t_1$ à partir de la cible primaire (ou l'absence de cible primaire) et la manoeuvre estimée pour le véhicule sélectionné $O^*_k$. Le tableau 6 suivant donne un exemple des déplacements ainsi estimés lorsque le traitement de prédiction précédent a été effectué, selon l'ordre de priorité, sur tous les véhicules de l'ensemble, sélectionnés tour à tour :

**Tableau 6 - Déplacements de chaque véhicule dans son propre référentiel**

| Véhicule | $O_3$ | $O_2$ | $O_1$ | $O_I=O_4$ | $O_5$ | $O_6$ |
|---|---|---|---|---|---|---|
| $\{\Delta \mathbf{X}; \Delta \mathbf{Y}, \Delta\theta\}^*_k$ | {0; 0 ; 0} | {1,1; 0 ; 0} | ... | {1; 0 ; 0} | ... | ... |
| $\{\Delta \mathbf{V_X}; \Delta \mathbf{V_Y} ;\Delta\dot\theta\}^*_k$ | {0; 0 ; 0} | {0; 0 ; 0} | ... | {0; 0 ; 0} | ... | ... |

Les résultats précédents sont ensuite transformés de nouveau (translation et rotation) pour être exprimés dans le référentiel lié au véhicule d'intérêt $O_I$, de sorte qu'il est possible, à partir des déplacements calculés, de donner la position et la vitesse prédites pour l'instant de prédiction $t_1$ pour chaque véhicule (étape 180 figure 3), cette position et cette vitesse étant exprimées dans le référentiel du véhicule d'intérêt $O_I$. Par exemple, pour le camion Os, la position $\{X; Y; \theta\}_{3,1}$ et la vitesse $\{V_X; V_Y ; \dot\theta\}_{3,1}$ relatives obtenues à l'issue du premier cycle de prédiction, associées au point $P_3(1)$ sont issus des calculs suivants :

$$\begin{pmatrix}\Delta X\\\Delta Y\end{pmatrix} = \begin{pmatrix}\cos(\theta i) & -\sin(\theta i)\\\sin(\theta i) & \cos(\theta i)\end{pmatrix}\begin{pmatrix}\Delta X\\\Delta Y\end{pmatrix}_{*3}$$

$$\Delta\theta \ = \ \Delta\theta_{*3}+ \theta i$$

$$\begin{pmatrix}X\\Y\end{pmatrix}_{3,1}= \begin{pmatrix}X\\Y\end{pmatrix}_{3,0} + \begin{pmatrix}\cos(\Delta\theta) & -\sin(\Delta\theta)\\\sin(\Delta\theta) & \cos(\Delta\theta)\end{pmatrix}\begin{pmatrix}\Delta X\\\Delta Y\end{pmatrix}$$

$$\theta_{3,1} = \ \theta_{3,0} + \Delta\theta$$

$$\begin{pmatrix}Vx\\Vy\end{pmatrix}_{3,1}= \begin{pmatrix}Vx\\Vy\end{pmatrix}_{3,0} + \begin{pmatrix}\cos(\Delta\dot\theta) & -\sin(\Delta\dot\theta)\\\sin(\Delta\dot\theta) & \cos(\Delta\dot\theta)\end{pmatrix}\begin{pmatrix}\Delta Vx\\\Delta Vy\end{pmatrix}$$

$$\dot\theta_{3,1} = \dot\theta_{3,0}+ \Delta\dot\theta$$

Un deuxième cycle de prédiction (non représenté), similaire au premier cycle de prédiction décrit ci-dessus, peut être réalisé par le système embarqué sur le véhicule d'intérêt $O_I$ pour prédire les points $P_k(2)$ occupés par chacun des K véhicules de l'ensemble à un deuxième instant de prédiction $t_2$ séparé du premier instant $t_1$ du pas temporel $\Delta t$, c'est-à-dire pour estimer une deuxième position relative $\{X; Y; \theta\}_{k,2}$ et une deuxième vitesse relative $\{V_X; V_Y; \dot{\theta}\}_{k,2}$ de chaque véhicule $O_k$ dudit ensemble, dans ledit premier référentiel et pour le deuxième instant de prédiction. Pour ce faire, le deuxième cycle de prédiction comporte :

- une première étape de réactualisation de la base de données dans laquelle les données initiales de position relative et de vitesse relative sont remplacées par la première position relative $\{X; Y; \theta\}_{k,1}$ et la première vitesse relative $\{V_X; V_Y; \dot{\theta}\}_{k,1}$ prédites au premier cycle de prédiction pour chaque véhicule $O_k$ de l'ensemble ; et
- l'étape 130 de tri, l'étape 140 de sélection et les sous-étapes 150-170 du premier cycle de prédiction, dans lesquelles l'instant initial t0 a été remplacé par le premier instant de prédiction $t_1$, et le premier instant de prédiction tia été remplacé par le deuxième instant de prédiction $t_2$.

En généralisant les principes précédents, on peut prévoir de compléter le procédé avec un nombre N supérieur à 2 de cycles de prédiction successifs, chaque $n^{ième}$ cycle de prédiction permettant de prédire une $n^{ième}$ position relative $\{X; Y; \theta\}_{k,n}$ et une $n^{ième}$ vitesse relative $\{V_X; V_Y; \dot{\theta}\}_{k,n}$ de chaque véhicule $O_k$ de l'ensemble initial, dans le premier référentiel lié au véhicule d'intérêt et pour un $n^{ième}$ instant de prédiction $t_n$ suivant un instant de prédiction $t_{n-1}$ précédent, chaque $n^{ième}$ cycle de prédiction comportant alors:

- une étape de réactualisation de la base de données dans laquelle les données de position relative et de vitesse relative sont remplacées par la position relative $\{X; Y; \theta\}_{k,n-1}$ et la vitesse relative $\{V_X; V_Y; \dot{\theta}\}_{k,n-1}$ prédites au cycle de prédiction précédent pour chaque véhicule $O_k$ de l'ensemble ; et
- l'étape 130 de tri, l'étape 140 de sélection et les sous-étapes 150-170 du premier cycle de prédiction, dans lesquelles l'instant initial $t_0$ a été remplacé par l'instant de prédiction $t_{n-1}$ précédent, et le premier instant de prédiction a été remplacé par le $n^{ième}$ instant de prédiction $t_n$.

**Revendications**

1.   Procédé (100) d'assistance à la conduite d'un véhicule automobile d'intérêt ($O_I$) comportant :

   - une étape (110) de détection lors de laquelle un système embarqué sur ledit véhicule automobile d'intérêt ($O_I$) détecte une pluralité de véhicules tiers ($O_1$-$O_3$, $O_5$-$O_7$) présents à un instant initial dans l'environnement du véhicule automobile d'intérêt ($O_I$), dans une zone de roulage à plusieurs voies de circulation;
   - un premier cycle de prédiction, par ledit système embarqué, d'une première position relative et d'une première vitesse relative de chaque véhicule $O_k$ dudit ensemble, dans un premier référentiel lié au véhicule d'intérêt ($O_I$) et pour un premier instant de prédiction suivant ledit instant initial, ledit premier cycle de prédiction comportant :

      ◦ une étape (120) de mémorisation, dans une base de données dudit système embarqué, de données initiales pour chaque véhicule $O_k$ d'un ensemble de K véhicules comprenant les véhicules tiers détectés à l'instant initial et le véhicule d'intérêt ($O_I$), lesdites données initiales comprenant une information relative à la voie de circulation courante, une position relative courante et une vitesse relative courante de chaque véhicule $O_k$ dudit ensemble à l'instant initial et dans ledit premier référentiel ;
      ◦ une étape (130) de tri lors de laquelle un ordre de priorité est affecté aux K véhicules $O_k$ de l'ensemble, l'ordre de priorité étant déterminé en fonction de la position et de la voie de circulation de chaque véhicule $O_k$ de l'ensemble mémorisées dans la base de données, et correspondant à un ordre dans lequel les véhicules $O_k$ de l'ensemble se succèdent dans ladite zone de roulage depuis un véhicule détecté à une position la plus éloignée en avant du véhicule d'intérêt ($O_I$);
      ◦ une étape (140) de sélection de chaque véhicule $O_k$ dudit ensemble dans l'ordre de priorité prédéterminé, et, pour chaque véhicule sélectionné $O^*_k$ dudit ensemble :

         - une sous-étape (150) d'identification d'un autre véhicule dudit ensemble susceptible d'être un véhicule cible primaire pour le véhicule sélectionné $O^*_k$;
         - une sous-étape (160) d'estimation d'une manoeuvre en cours ou sur le point d'être effectuée par le véhicule sélectionné $O^*_k$ à partir au moins du véhicule cible primaire identifié, d'informations relatives au seul véhicule sélectionné $O^*_k$ et d'informations relatives à l'environnement courant du véhicule sélectionné $O^*_k$;

le procédé d'assistance étant **caractérisé en ce qu'**il comporte de plus, pour chaque véhicule sélectionné dudit ensemble :

- une sous-étape (170) d'estimation du déplacement du véhicule sélectionné $O^*_k$ entre l'instant initial et ledit premier instant de prédiction à partir de la manoeuvre estimée pour le véhicule sélectionné $O^*_k$ ;

la première position relative et la première vitesse relative du véhicule sélectionné $O^*_k$ pour ledit premier instant de prédiction étant prédites à partir du déplacement estimé.

2. Procédé selon la revendication 1, **caractérisé en ce que** les sous-étapes (150, 160, 170) sont réalisées à partir de données de position et de vitesse transformées dans un référentiel à deux dimensions lié au véhicule sélectionné $O^*_k$.

3. Procédé selon l'une quelconque des revendications 1 ou 2, **caractérisé en ce que** la manoeuvre estimée est choisie dans un ensemble prédéfini de manoeuvres possibles.

4. Procédé selon la revendication 3, **caractérisé en ce que** l'ensemble prédéfini de manoeuvre possibles pour un véhicule sélectionné $O^*_k$ comprend :

- le maintien dans sa voie courante ;
- son changement de voie pour la voie gauche ;
- son changement de voie pour la voie droite;
- son arrêt sur sa voie courante.

5. Procédé selon l'une quelconque des revendications 1 à 4, **caractérisé en ce que** la sous-étape (150) d'identification d'un véhicule cible primaire potentielle pour le véhicule sélectionné $O^*_k$ comprend une recherche d'un véhicule de l'ensemble situé sur la même voie, à l'avant et le plus proche du véhicule sélectionné $O^*_k$.

6. Procédé selon l'une quelconque des revendications 1 à 5, **caractérisé en ce que** les informations relatives au seul véhicule sélectionné $O^*_k$ comprennent son déplacement latéral, et/ou un état allumé ou éteint de l'un de ses clignotants, et/ou un historique de ses positions mémorisées.

7. Procédé selon l'une quelconque des revendications 1 à 6, **caractérisé en ce que** les informations relatives à l'environnement courant du véhicule sélectionné $O^*_k$ comprennent le type de lignes de marquage de la voie de circulation sur laquelle le véhicule sélectionné $O^*_k$ est situé et/ou l'occupation des voies de circulation adjacentes à la voie de circulation courante du véhicule sélectionné $O^*_k$, et/ou la limitation de vitesse courante affectée à la voie de circulation.

8. Procédé selon l'une quelconque des revendications précédentes, **caractérisé en ce qu'**il comporte un deuxième cycle de prédiction, par ledit système embarqué, d'une deuxième position relative $\{X; Y; \theta\}_{k,2}$ et d'une deuxième vitesse relative $\{V_X; V_Y; \dot{\theta}\}_{k,2}$ de chaque véhicule $O_k$ dudit ensemble, dans ledit premier référentiel et pour un deuxième instant de prédiction suivant ledit premier instant de prédiction, le deuxième cycle de prédiction comportant :

- une première étape de réactualisation de la base de données dans laquelle les données initiales de position relative et de vitesse relative sont remplacées par la première position relative $\{X; Y; \theta\}_{k,1}$ et la première vitesse relative $\{V_X; V_Y; \dot{\theta}\}_{k,1}$ prédites au premier cycle de prédiction pour chaque véhicule $O_k$ de l'ensemble ; et
- l'étape (130) de tri, l'étape (140) de sélection et les sous-étapes (150-170) du premier cycle de prédiction, dans lesquelles l'instant initial a été remplacé par le premier instant de prédiction, et le premier instant de prédiction a été remplacé par le deuxième instant de prédiction.

9. Procédé selon la revendication 8, **caractérisé en ce qu'**il comporte un nombre N supérieur à 2 de cycles de prédiction successifs, chaque $n^{ième}$ cycle de prédiction permettant de prédire une $n^{ième}$ position relative $\{X; Y; \theta\}_{k,n}$ et une $n^{ième}$ vitesse relative $\{V_X; V_Y; \dot{\theta}\}_{k,n}$ de chaque véhicule $O_k$ dudit ensemble, dans ledit premier référentiel et pour un $n^{ième}$ instant de prédiction suivant un instant de prédiction précédent, chaque $n^{ième}$ cycle de prédiction comportant :

- une étape de réactualisation de la base de données dans laquelle les données de position relative et de vitesse relative sont remplacées par la position relative et la vitesse relative prédites au cycle de prédiction précédent

pour chaque véhicule $O_k$ de l'ensemble ; et

- l'étape (130) de tri, l'étape (140) de sélection et les sous-étapes (150-170) du premier cycle de prédiction, dans lesquelles l'instant initial a été remplacé par l'instant de prédiction précédent, et le premier instant de prédiction a été remplacé par le $n^{ième}$ instant de prédiction.

**10.** Procédé selon la revendication 9, **caractérisé en ce que** les instants de prédiction successifs sont séparés par un pas temporel constant.

**11.** Procédé selon la revendication 10, dans lequel N est égal à 33 et le pas temporel constant est égal à 200 ms.

**12.** Système d'assistance à la conduite embarqué sur un véhicule d'intérêt ($O_l$), configuré pour implémenter le procédé selon l'une quelconque des revendications 1 à 11.

**Patentansprüche**

**1.** Fahrerassistenzverfahren (100) für ein Kraftfahrzeug von Interesse ($O_l$), beinhaltend:

- einen Erkennungsschritt (110), bei dem ein bordeigenes System eines Kraftfahrzeugs von Interesse ($O_l$) eine Vielzahl von Drittfahrzeugen ($O_1$-$O_3$, $O_5$-$O_7$) erkennt, die zu einem Ausgangszeitpunkt in der Umgebung des Kraftfahrzeugs von Interesse ($O_l$) in einem Fahrbereich mit mehreren Fahrspuren anwesend sind;
- einen ersten Prädiktionszyklus zur Prädiktion, durch das bordeigene System, einer ersten relativen Position und einer ersten relativen Geschwindigkeit jedes Fahrzeugs $O_k$ der Menge in einem mit dem Fahrzeug von Interesse ($O_l$) verbundenen ersten Bezugssystem und für einen ersten Prädiktionszeitpunkt nach dem Ausgangszeitpunkt, wobei der erste Prädiktionszyklus beinhaltet:

o einen Schritt (120) des Speicherns, in einer Datenbank des bordeigenen Systems, von Ausgangsdaten für jedes Fahrzeug $O_k$ einer Menge von K Fahrzeugen, welche die zum Ausgangszeitpunkt erkannten Drittfahrzeuge und das Fahrzeug von Interesse ($O_l$) umfasst, wobei die Ausgangsdaten eine Information über die aktuelle Fahrspur, eine aktuelle relative Position und eine aktuelle relative Geschwindigkeit jedes Fahrzeugs $O_k$ der Menge zum Ausgangszeitpunkt und in dem ersten Bezugssystem umfassen;
∘ einen Schritt (130) des Sortierens, bei dem den K Fahrzeugen $O_k$ der Menge eine Rangfolge zugeordnet wird, wobei die Rangfolge in Abhängigkeit von der Position und der Fahrspur jedes Fahrzeugs $O_k$ der Menge, die in der Datenbank gespeichert sind, bestimmt wird und einer Reihenfolge entspricht, in der die Fahrzeuge $O_k$ der Menge in dem Fahrbereich ausgehend von einem Fahrzeug, das in einer am weitesten entfernten Position vor dem Fahrzeug von Interesse ($O_l$) erkannt wird, aufeinander folgen;
o einen Schritt (140) des Auswählens jedes Fahrzeugs $O_k$ der Menge in der vorbestimmten Rangfolge und, für jedes ausgewählte Fahrzeug $O^*_k$ der Menge:

- einen Teilschritt (150) des Identifizierens eines anderen Fahrzeugs der Menge, das geeignet ist, ein Primärzielfahrzeug für das ausgewählte Fahrzeug $O^*_k$ zu sein;
- einen Teilschritt (160) des Schätzens eines Manövers, das gerade im Gang ist oder kurz davor steht, vom ausgewählten Fahrzeug $O^*_k$ ausgeführt zu werden, ausgehend mindestens von dem identifizierten Primärzielfahrzeug, von Informationen $O^*_k$ und von Informationen über die aktuelle Umgebung des ausgewählten Fahrzeugs $O^*_k$;

wobei das Assistenzverfahren **dadurch gekennzeichnet ist, dass** es außerdem für jedes ausgewählte Fahrzeug der Menge umfasst

- einen Teilschritt (170) des Schätzens der Fortbewegung des ausgewählten Fahrzeugs $O^*_k$ zwischen dem Ausgangszeitpunkt und dem ersten Prädiktionszeitpunkt ausgehend von dem für das ausgewählte Fahrzeug $O^*_k$ geschätzten Manöver;

wobei die erste relative Position und die erste relative Geschwindigkeit des ausgewählten Fahrzeugs $O^*_k$ für den ersten Prädiktionszeitpunkt ausgehend von der geschätzten Fortbewegung prädiziert werden.

**2.** Verfahren nach Anspruch 1, **dadurch gekennzeichnet, dass** die Teilschritte (150, 160, 170) ausgehend von Positions- und Geschwindigkeitsdaten ausgeführt werden, die in ein mit dem ausgewählten Fahrzeug $O^*_k$ verbundenes

zweidimensionales Bezugssystem transformiert wurden.

3. Verfahren nach einem der Ansprüche 1 oder 2, **dadurch gekennzeichnet, dass** das geschätzte Manöver aus einer vorgegebenen Menge möglicher Manöver gewählt wird.

4. Verfahren nach Anspruch 3, **dadurch gekennzeichnet, dass** die vorgegebene Menge möglicher Manöver für ein ausgewähltes Fahrzeug $O^*_k$ umfasst:

- das Halten seiner aktuellen Spur;
- seinen Spurwechsel zur linken Spur;
- seinen Spurwechsel zur rechten Spur;
- sein Anhalten auf der aktuellen Spur.

5. Verfahren nach einem der Ansprüche 1 bis 4, **dadurch gekennzeichnet, dass** der Teilschritt (150) des Identifizierens eines möglichen Primärzielfahrzeugs für das ausgewählte Fahrzeug $O^*_k$ ein Suchen eines Fahrzeugs der Menge umfasst, das sich auf derselben Spur wie das ausgewählte Fahrzeug $O^*_k$ vor diesem und am nächsten zu diesem befindet.

6. Verfahren nach einem der Ansprüche 1 bis 5, **dadurch gekennzeichnet, dass** die Informationen über das bloße ausgewählte Fahrzeug $O^*_k$ seine seitliche Fortbewegung und/oder einen ein- oder ausgeschalteten Zustand einer seiner Blinkleuchten und/oder eine Historie seiner gespeicherten Positionen umfassen.

7. Verfahren nach einem der Ansprüche 1 bis 6, **dadurch gekennzeichnet, dass** die Informationen über die aktuelle Umgebung des ausgewählten Fahrzeugs $O^*_k$ den Markierungslinientyp der Fahrspur, auf der sich das ausgewählte Fahrzeug $O^*_k$ befindet, und/oder die Belegung der an die aktuelle Fahrspur des ausgewählten Fahrzeugs $O^*_k$ angrenzenden Fahrspuren und/oder die der Fahrspur zugeordnete aktuelle Geschwindigkeitsbeschränkung umfassen.

8. Verfahren nach einem der vorhergehenden Ansprüche, **dadurch gekennzeichnet, dass** es einen zweiten Prädiktionszyklus zur Prädiktion, durch das bordeigene System, einer zweiten relativen Position $\{X; Y; \theta\}_{k,2}$ und einer zweiten relativen Geschwindigkeit $\{V_X; V^Y\}_{k,2}$ jedes Fahrzeugs $O_k$ der Menge in dem ersten Bezugssystem und für einen zweiten Prädiktionszeitpunkt nach dem ersten Prädiktionszeitpunkt beinhaltet, wobei der zweite Prädiktionszyklus beinhaltet:

- einen ersten Schritt der Reaktualisierung der Datenbank, in dem die Ausgangsdaten für die relative Position und die relative Geschwindigkeit durch die erste relative Position $\{X; Y; \theta\}_{k,1}$ und die erste relative Geschwindigkeit $\{V_X; V_Y; \}_{k,1}$, die beim ersten Prädiktionszyklus für jedes Fahrzeug $O_k$ der Menge prädiziert wurden, ersetzt werden, und
- den Sortierschritt (130), den Auswählschritt (140) und die Teilschritte (150-170) des ersten Prädiktionszyklus, in denen der Ausgangszeitpunkt durch den ersten Prädiktionszeitpunkt ersetzt worden ist und der erste Prädiktionszeitpunkt durch den zweiten Prädiktionszeitpunkt ersetzt worden ist.

9. Verfahren nach Anspruch 8, **dadurch gekennzeichnet, dass** es eine Anzahl N größer als 2 aufeinander folgende Prädiktionszyklen beinhaltet, wobei jeder n-te Prädiktionszyklus es ermöglicht, eine n-te relative Position $\{X; Y; \dot{\theta}\}_{k,n}$ und eine n-te relative Geschwindigkeit $\{V_X; V_Y; \}_{k,n}$ jedes Fahrzeugs $O_k$ der Menge in dem ersten Bezugssystem und für einen n-ten Prädiktionszeitpunkt nach einem vorhergehenden Prädiktionszeitpunkt zu prädizieren, wobei jeder n-te Prädiktionszyklus beinhaltet:

- einen Schritt der Reaktualisierung der Datenbank, in dem die Daten für die relative Position und die relative Geschwindigkeit durch die relative Position und die relative Geschwindigkeit ersetzt werden, die beim vorhergehenden Prädiktionszyklus für jedes Fahrzeug $O_k$ der Menge prädiziert wurden, und
- den Sortierschritt (130), den Auswählschritt (140) und die Teilschritte (150-170) des ersten Prädiktionszyklus, in denen der Ausgangszeitpunkt durch den vorhergehenden Prädiktionszeitpunkt ersetzt worden ist und der erste Prädiktionszeitpunkt durch den n-ten Prädiktionszeitpunkt ersetzt worden ist.

10. Verfahren nach Anspruch 9, **dadurch gekennzeichnet, dass** die aufeinander folgenden Prädiktionszeitpunkte durch einen konstanten Zeitschritt getrennt sind.

**11.** Verfahren nach Anspruch 10, bei dem N gleich 33 ist und der konstante Zeitschritt gleich 200 ms ist.

**12.** Bordeigenes Fahrerassistenzsystem eines Fahrzeugs von Interesse ($O_I$), das dazu ausgestaltet ist, das Verfahren nach einem der Ansprüche 1 bis 11 zu implementieren.

**Claims**

**1.** Driver-assistance method (100) for a motor vehicle of interest ($O_I$), comprising:

- a detection step (110) during which an on-board system on said motor vehicle of interest ($O_I$) detects a plurality of third-party vehicles ($O_1$-$O_3$, $O_5$-$O_7$) which are present at an initial instant in the environment of the motor vehicle of interest ($O_I$), in a multi-lane travel zone;
- a first cycle of prediction, by said on-board system, of a first relative position and of a first relative speed of each vehicle $O_k$ in said set, in a first frame of reference linked to the vehicle of interest ($O_I$) and for a first prediction instant following said initial instant, said first prediction cycle comprising:

  ∘ a step (120) of storing, in a database of said on-board system, initial data for each vehicle $O_k$ in a set of K vehicles comprising the third-party vehicles which are detected at the initial instant and the vehicle of interest ($O_I$), said initial data comprising information relating to the current traffic lane, a current relative position and a current relative speed of each vehicle $O_k$ in said set at the initial instant and in said first frame of reference;
  ∘ a sorting step (130) during which an order of priority is assigned to the K vehicles $O_k$ in the set, the order of priority being determined in accordance with the position and with the traffic lane of each vehicle $O_k$ in the set which are stored in the database, and corresponding to an order in which the vehicles $O_k$ in the set follow one another in said travel zone starting from a vehicle detected in a position which is furthest ahead of the vehicle of interest ($O_I$);
  ∘ a step (140) of selecting each vehicle $O_k$ in said set in the predetermined order of priority, and, for each selected vehicle $O^*_k$ in said set:

    - a sub-step (150) of identifying another vehicle in said set which is able to be a primary target vehicle for the selected vehicle $O^*_k$;
    - a sub-step (160) of estimating a manoeuvre which is in progress or about to be performed by the selected vehicle $O^*_k$ on the basis at least of the identified primary target vehicle, of information relating to the only selected vehicle $O^*_k$ and of information relating to the current environment of the selected vehicle $O^*_k$;

  the assistance method being **characterized in that** it comprises in addition, for each selected vehicle in said set:

    - a sub-step (170) of estimating the movement of the selected vehicle $O^*_k$ between the initial instant and said first prediction instant on the basis of the manoeuvre which is estimated for the selected vehicle $O^*_k$;

  the first relative position and the first relative speed of the selected vehicle $O^*_k$ for said first prediction instant being predicted on the basis of the estimated movement.

**2.** Method according to Claim 1, **characterized in that** the sub-steps (150, 160, 170) are carried out on the basis of position and speed data which are transformed into a two-dimensional frame of reference which is linked to the selected vehicle $O^*_k$.

**3.** Method according to either one of Claims 1 and 2, **characterized in that** the estimated manoeuvre is chosen from a predefined set of possible manoeuvres.

**4.** Method according to Claim 3, **characterized in that** the predefined set of possible manoeuvres for a selected vehicle $O^*_k$ comprises:

- keeping in its current lane;
- it changing lane to the left lane;
- it changing lane to the right lane;

- it stopping in its current lane.

5. Method according to any one of Claims 1 to 4, **characterized in that** the sub-step (150) of identifying a potential primary target vehicle for the selected vehicle $O^*_k$ comprises searching for a vehicle in the set located in the same lane, ahead of and closest to the selected vehicle $O^*_k$.

6. Method according to any one of Claims 1 to 5, **characterized in that** the information relating to the only selected vehicle $O^*_k$ comprises its sideways movement, and/or an on or off state of one of its indicators, and/or a history of its stored positions.

7. Method according to any one of Claims 1 to 6, **characterized in that** the information relating to the current environment of the selected vehicle $O^*_k$ comprises the type of marking lines of the traffic lane in which the selected vehicle $O^*_k$ is located and/or the occupancy of the traffic lanes which are adjacent to the current traffic lane of the selected vehicle $O^*_k$, and/or the current speed limit assigned to the traffic lane.

8. Method according to any one of the preceding claims, **characterized in that** it comprises a second cycle of prediction, by said on-board system, of a second relative position $\{X; Y; \theta\}_{k,2}$ and of a second relative speed $\{V_X; V_Y; \}_{k,2}$ of each vehicle $O_k$ in said set, in said first frame of reference and for a second prediction instant following said first prediction instant, the second prediction cycle comprising:

   - a first step of updating the database, in which the initial relative position and relative speed data are replaced by the first relative position $\{X; Y; \theta\}_{k,1}$ and the first relative speed $\{V_X; V_Y; \}_{k,1}$ which are predicted in the first prediction cycle for each vehicle $O_k$ in the set; and
   - the sorting step (130), the selection step (140) and the sub-steps (150-170) of the first prediction cycle, in which the initial instant has been replaced by the first prediction instant, and the first prediction instant has been replaced by the second prediction instant.

9. Method according to Claim 8, **characterized in that** it comprises a number N, which is greater than 2, of successive prediction cycles, each $n^{th}$ prediction cycle making it possible to predict an $n^{th}$ relative position $\{X; Y; \theta\}_{k,n}$ and an $n^{th}$ relative speed $\{V_X; V_Y; \}_{k,n}$ of each vehicle $O_k$ in said set, in said first frame of reference and for an $n^{th}$ prediction instant following a preceding prediction instant, each $n^{th}$ prediction cycle comprising:

   - a step of updating the database, in which the relative position and relative speed data are replaced by the relative position and the relative speed which are predicted in the preceding prediction cycle for each vehicle $O_k$ in the set; and
   - the sorting step (130), the selection step (140) and the sub-steps (150-170) of the first prediction cycle, in which the initial instant has been replaced by the preceding prediction instant, and the first prediction instant has been replaced by the $n^{th}$ prediction instant.

10. Method according to Claim 9, **characterized in that** the successive prediction instants are separated by a constant time step.

11. Method according to Claim 10, in which N is equal to 33 and the constant time step is equal to 200 ms.

12. On-board driver-assistance system on a vehicle of interest ($O_I$), configured to implement the method according to any one of Claims 1 to 11.

EP 4 146 513 B1

# Fig. 1

# Fig. 2

16

100

Détection véhicules tiers à $t_0$ ——110

Données initiales véhicule $O_k$
$\{X;\ Y\ ;\Theta\}_{k,0}$ et $\{V_X;\ V_Y\ ;\Theta\}_{k,0}$ ——120

Tri véhicules $O_k$
Selon ordre de priorité
$K = [1\ ;\ K]$ ——130

Sélection véhicule $O^*_k$
Selon ordre de priorité ——140

Cible primaire estimée pour
véhicule $O^*_k$ ——150

Manoeuvre estimée véhicule
$O^*_k$ ——160

Déplacement $\{\Delta X;\Delta Y;\Delta\Theta\}^*_k$
et $\{\Delta V_X;\Delta V_Y\ ;\Delta\Theta\}^*_k$ du
véhicule $O^*_k$ estimés par $t_1$ ——170

$\{X;\ Y\ ;\Theta\}_{k,1}$ et $\{V_X;\ V_Y\ ;\Theta\}_{k,1}$
du véhicule $O^*_k$ pour $t_1$ ——180

Sélection véhicule
$O^*_k$ suivant selon
ordre de priorité

Premier
cycle

# Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102015200215 A1

**Littérature non-brevet citée dans la description**

- **LEFÈVRE et al.** A survey on motion prédiction and risk assessment for intelligent vehicles. *Robomech Journal,* 2014, vol. 1, 1, http://www.robometechjournal.com/content/1/1/1